# EUROPEAN PATENT SPECIFICATION

(11) **EP 4 503 355 B1**
(45) Date of publication and mention of the grant of the patent: **01.04.2026**
(21) Application number: 22935487.3
(22) Date of filing: 31.03.2022
(51) Int. Cl.: H02B 13/035, H01H 33/36, H01H 3/36

(54) **GAS-INSULATED SWITCHGEAR**
GASISOLIERTE SCHALTANLAGE
APPAREILLAGE DE COMMUTATION À ISOLATION GAZEUSE

(43) Date of publication of application: 05.02.2025
(73) Proprietor: MITSUBISHI ELECTRIC CORPORATION, Chiyoda-ku Tokyo 100-8310 (JP)
(72) Inventor: SHIMABAYASHI, Keita, Tokyo 100-8310 (JP); NAKAUCHI, Shinichiro, Tokyo 100-8310 (JP); KUBOTA, Masato, Tokyo 100-8310 (JP)
(74) Representative: Witte, Weller & Partner Patentanwälte mbB
(86) International application number: PCT/JP2022/016743
(87) International publication number: WO 2023/188346

(56) References cited:
- WO-A1-2015/111133
- DE-A1- 102019 207 926
- JP-A- 2008 022 618
- JP-A- 2017 158 397
- JP-A- H01 186 106
- JP-A- H07 123 546
- JP-A- H07 123 546
- JP-U- H0 345 009
- US-A1- 2016 268 069
- US-B2- 11 069 494

## Description

### Field

The present disclosure relates to a gas-insulated switch including a general switch.

### Background

A gas-insulated switch in which general switches including a disconnector and a grounding switch, in addition to a breaker, are housed in a tank enclosing insulating gas uses a method for: installing a general switch manipulator that is a power source of a switching operation of each general switch outside the tank; and transmitting rotational force from each general switch manipulator to each general switch with a wire so as to cause the general switch to perform the switching operation.

Since the general switch manipulator is installed separately from a breaker manipulator that is a power source of a switching operation of the breaker, an attachment position of the general switch manipulator has been changed according to an arrangement layout of the general switch. However, when the attachment position of the general switch manipulator changes, it is necessary to change a device fixing method. Therefore, there has been a problem in that the number of models increases and it is necessary to individually design each model.

A gas-insulated switch disclosed in Patent Literature 1 houses a plurality of manipulators in a box disposed on a rack. In the gas-insulated switch disclosed in Patent Literature 1, since the plurality of manipulators is housed in the box, it is not necessary to change the attachment position of the general switch manipulator according to the arrangement layout of the general switch.

### Citation List

### Patent Literature

Patent Literature 1: International Publication Pamphlet No. 2015/111133

### Summary of Invention

### Problem to be solved by the Invention

In a case where a plurality of general switch are arranged to be adjacent to each other, it is necessary to prevent a wire from being bent with a curvature equal to or less than a certain value, in order to prevent bending of the wire. However, Patent Literature 1 does not disclose a method for avoiding wire bending, when the plurality of general switch manipulators are housed in a box, it is necessary to widen an interval between the general switch manipulators. In this way, Patent Literature 1 does not disclose a method for reducing an installation space of the general switch manipulator.

The present disclosure has been made in view of the above, and an object of the present disclosure is to obtain a gas-insulated switch that does not need to change an attachment position of a general switch manipulator according to an arrangement layout of the general switch and reduces a space where the general switch manipulator is installed.

The document JP H07 123546 A discloses a gas-insulated switch according to the preamble of claim 1.

### Means to Solve the Problem

In order to solve the above problems and to achieve the object, a gas-insulated switch according to the present disclosure includes: a conductor configured to form a power transmission circuit; a breaker configured to cut off a current flowing in the conductor; a plurality of general switches including a disconnector that separates a part of the conductor, a grounding switch that grounds the conductor separated from the power transmission circuit by the disconnector, and a switching operation unit that opens and closes with rotation of a driven pulley; the breaker manipulator that causes the breaker to perform a switching operation; a plurality of the general switch manipulators that include a motor and a driving pulley rotationally driven by the motor; a wire that transmits rotational force of the driving pulley to the driven pulley; and a housing that houses the breaker manipulator and the general switch manipulator. Regarding the plurality of the general switch manipulators, two general switch manipulators are arranged in the horizontal direction and set as a set, and each set is disposed above the breaker manipulator, in the housing. In each of the two general switch manipulators included in the single set, the wire is put around the driving pulley, from a direction different from a direction in which another general switch manipulator in the same set is disposed.

### Effects of the Invention

According to the present disclosure, an effect is achieved that a gas-insulated switch is obtained that does not need to change an attachment position of a general switch manipulator according to an arrangement layout of the general switch and reduces a space where the general switch manipulator is installed.

### Brief Description of Drawings

FIG. 1 is a system configuration diagram of a gas-insulated switch according to a first embodiment.
FIG. 2 is a horizontal cross-sectional view of a housing that houses a general switch manipulator and a breaker manipulator of the gas-insulated switch according to the first embodiment.
FIG. 3 is a vertical cross-sectional view of the housing that houses the general switch manipulator and the breaker manipulator of the gas-insulated switch according to the first embodiment.
FIG. 4 is a horizontal cross-sectional view of the housing that houses the general switch manipulator and the breaker manipulator of the gas-insulated switch according to a second embodiment.
FIG. 5 is a vertical cross-sectional view of the housing that houses the general switch manipulator and the breaker manipulator of the gas-insulated switch according to the second embodiment.
FIG. 6 is a horizontal cross-sectional view of the housing that houses the general switch manipulator and the breaker manipulator of the gas-insulated switch according to a third embodiment.
FIG. 7 is a vertical cross-sectional view of the housing that houses the general switch manipulator and the breaker manipulator of the gas-insulated switch according to the third embodiment.

### Description of Embodiments

Hereinafter, a gas-insulated switch according to embodiments will be described in detail with reference to the drawings.

### First Embodiment.

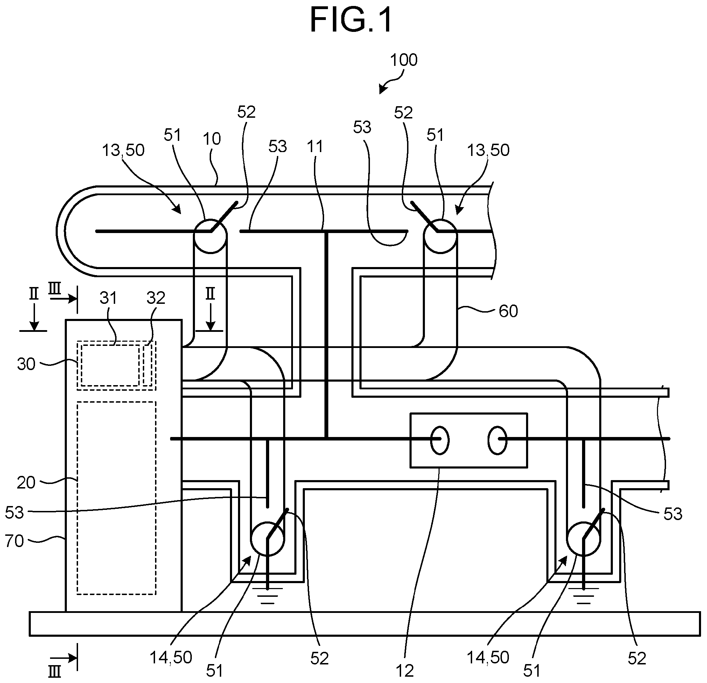

FIG. 1 is a system configuration diagram of a gas-insulated switch according to a first embodiment. A gas-insulated switch 100 according to the first embodiment includes a tank 10 enclosing insulating gas. Inside of the tank 10 includes; a conductor 11 that forms a power transmission circuit; a breaker 12 configured to cut off a current flowing in the conductor 11; a disconnector 13 configured to disconnect a part of the conductor 11; and a grounding switch 14 configured to ground the conductor 11 separated from the power transmission circuit by the disconnector 13. Furthermore, the gas-insulated switch 100 includes: a breaker manipulator 20 that is a power source of a switching operation of the breaker 12; and a plurality of general switch manipulators 30 that are power sources of a switching operating of each general switch 50 including the disconnector 13 and the grounding switch 14. The gas-insulated switch 100 according to the first embodiment includes the two disconnectors 13 and the two grounding switches 14. That is, the gas-insulated switch 100 according to the first embodiment includes the four general switches 50.

The general switch manipulator 30 includes a motor 31 and a driving pulley 32 rotationally driven by the motor 31. Each general switch 50 includes: a driven pulley 51 configured to receive driving force of the switching operation from the general switch manipulator 30; a movable junction 52 that moves with rotation of the driven pulley 51; and a fixed junction 53 that is fixed to the conductor 11. Note that the general switch 50 may include a Geneva mechanism that converts a continuous rotational motion of the driven pulley 51 into an intermittent rotational motion of the movable junction 52. The general switch 50 is configured to perform a switching operation by switching a closed state where the movable junction 52 has contact with the fixed junction 53 and an opened state where the movable junction 52 does not have contact with the fixed junction 53. A wire 60 that is a rotational force transmitting member is stretched between the driving pulley 32 and the driven pulley 51.

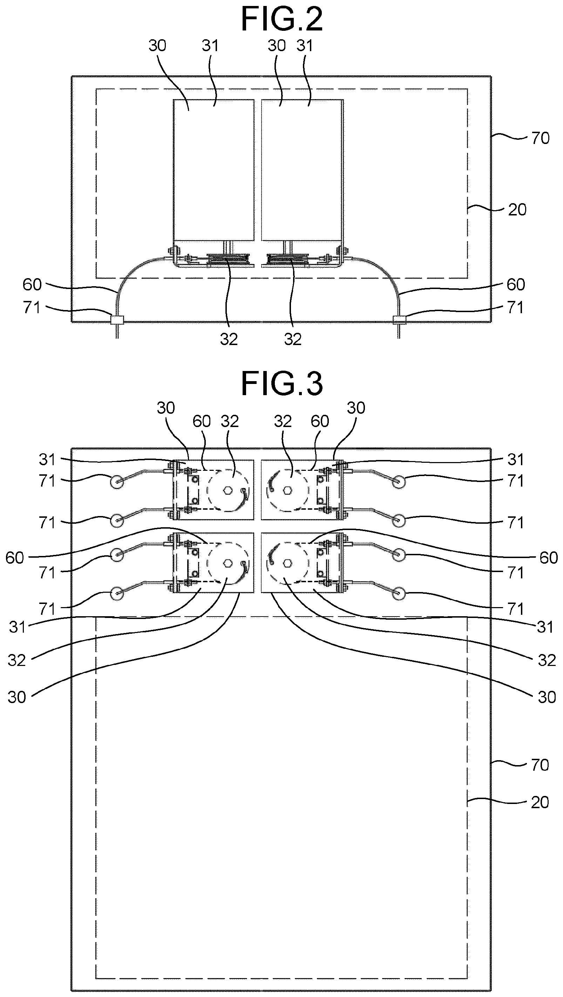

FIG. 2 is a horizontal cross-sectional view of a housing that houses the general switch manipulator and the breaker manipulator of the gas-insulated switch according to the first embodiment. FIG. 3 is a vertical cross-sectional view of the housing that houses the general switch manipulator and the breaker manipulator of the gas-insulated switch according to the first embodiment. FIG. 2 illustrates a horizontal cross section of a housing 70 taken along a II-II line in FIG. 1. FIG. 3 illustrates a vertical cross section of the housing 70 taken along a III-III line in FIG. 1. Each general switch manipulator 30 is housed in the housing 70 common to the breaker manipulator 20. Regarding the plurality of the general switch manipulators 30, the two general switch manipulators 30 arranged in the horizontal direction and set as a set, and each set is disposed above the breaker manipulator 20. In the gas-insulated switch 100 according to the first embodiment, the two sets of the general switch manipulators 30 are arranged in the vertical direction and housed. In each of the two general switch manipulators 30 included in the single set, the wire 60 is put around the driving pulley 32, from a direction opposite to a direction in which another general switch manipulator 30 in the same set is disposed. The wire 60 is drawn out from the housing 70 through a wire hole 71 formed in the housing 70.

In a case where the two general switch manipulators 30 are arranged and installed, if the wire 60 is put around the driving pulley 32 from a side adjacent to the general switch manipulator 30, it is necessary to widen an interval between the general switch manipulators 30, and a space necessary for installing the housing 70 that houses the general switch manipulators 30 is widened. In the gas-insulated switch 100 according to the first embodiment, regarding each of the two general switch manipulators 30 included in the single set, since the wire 60 is put around the driving pulley 32 from the direction opposite to the direction in which the other general switch manipulator 30 in the same set is disposed, it is possible to narrow the interval between the general switch manipulators 30, and the space where the general switch manipulators 30 are installed can be reduced.

In the gas-insulated switch 100 according to the first embodiment, since the breaker manipulator 20 and the general switch manipulator 30 are housed in the common housing 70, there is no need to change an attachment position of the general switch manipulator 30 according to an installation layout of the general switch 50. Furthermore, since the breaker manipulator 20 and the general switch manipulator 30 are housed in the common housing 70, maintenance of the breaker manipulator 20 and the general switch manipulator 30 is easy. Furthermore, it is necessary to open/close the plurality of general switches 50 in a determined order. However, since the plurality of the general switch manipulators 30 is collectively installed in the housing 70 in the gas-insulated switch 100 according to the first embodiment, an operation for switching the general switches 50 in the determined order can be easily and manually performed.

### Second Embodiment.

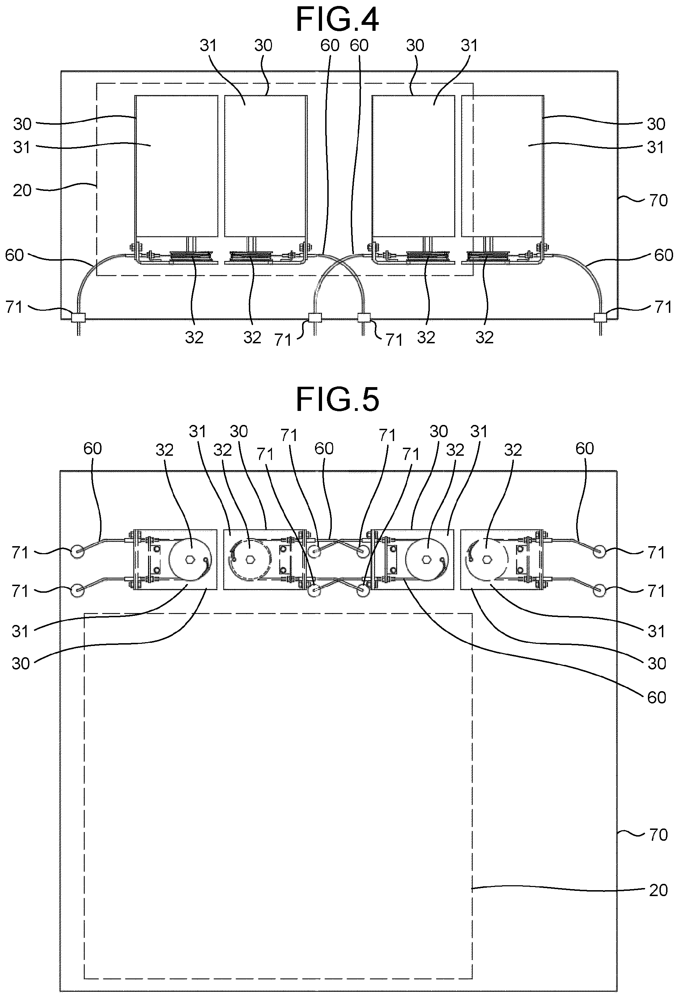

FIG. 4 is a horizontal cross-sectional view of the housing that houses the general switch manipulator and the breaker manipulator of the gas-insulated switch according to a second embodiment. FIG. 5 is a vertical cross-sectional view of the housing that houses the general switch manipulator and the breaker manipulator of the gas-insulated switch according to the second embodiment. In the gas-insulated switch 100 according to the second embodiment, the plurality of the general switch manipulators 30 are housed in the housing 70 common to the breaker manipulator 20. Regarding the plurality of the general switch manipulators 30, the two general switch manipulators 30 are arranged in the horizontal direction and set as a set, and each set is disposed above the breaker manipulator 20. In the gas-insulated switch 100 according to the second embodiment, the two sets of the general switch manipulators 30 are arranged in the horizontal direction and housed. In each of the two general switch manipulators 30 included in the single set, the wire 60 is put around the driving pulley 32, from a direction opposite to a direction in which another general switch manipulator 30 in the same set is disposed. The wire 60 is drawn out from the housing 70 through the wire hole 71 formed in the housing 70.

The wires 60 put around the driving pulleys 32 of the respective two adjacent the general switch manipulators 30 included in different sets are shifted to the upside and the downside and are drawn in the housing 70. By shifting the wires 60 to the upside and the downside and drawing the wires 60 into the housing 70, an interval between the two adjacent general switch manipulators 30 included in the different sets can be narrowed.

In the gas-insulated switch 100 according to the second embodiment, regarding each of the two general switch manipulators 30 included in the single set, since the wire 60 is put around the driving pulley 32 from the direction opposite to the direction in which the other general switch manipulator 30 in the same set is disposed, it is possible to narrow the interval between the general switch manipulators 30 in the same set, and the space where the general switch manipulators 30 are installed can be reduced.

Furthermore, similarly to the gas-insulated switch 100 according to the first embodiment, in the gas-insulated switch 100 according to the second embodiment, the maintenance of the breaker manipulator 20 and the general switch manipulator 30 is easy, and the operation for switching the general switches 50 in the determined order can be easily and manually performed.

Furthermore, in the gas-insulated switch 100 according to the second embodiment, since the set of the general switch manipulators 30 are arranged in the horizontal direction, each general switch manipulator 30 is installed at the same height. When the set of the general switch manipulators 30 are arranged in the vertical direction, it is necessary to install a stepstool for enabling to manually operate the set of upper and lower for the general switch manipulators 30. However, in the gas-insulated switch 100 according to the second embodiment, the plurality of the general switch manipulators 30 are installed at the same height, it is possible to manually operate all the general switch manipulators 30 without installing the stepstool. Therefore, as compared with the gas-insulated switch 100 according to the first embodiment, in the gas-insulated switch 100 according to the second embodiment, it is possible to further reduce the space where the general switch manipulator 30 is installed.

### Third Embodiment.

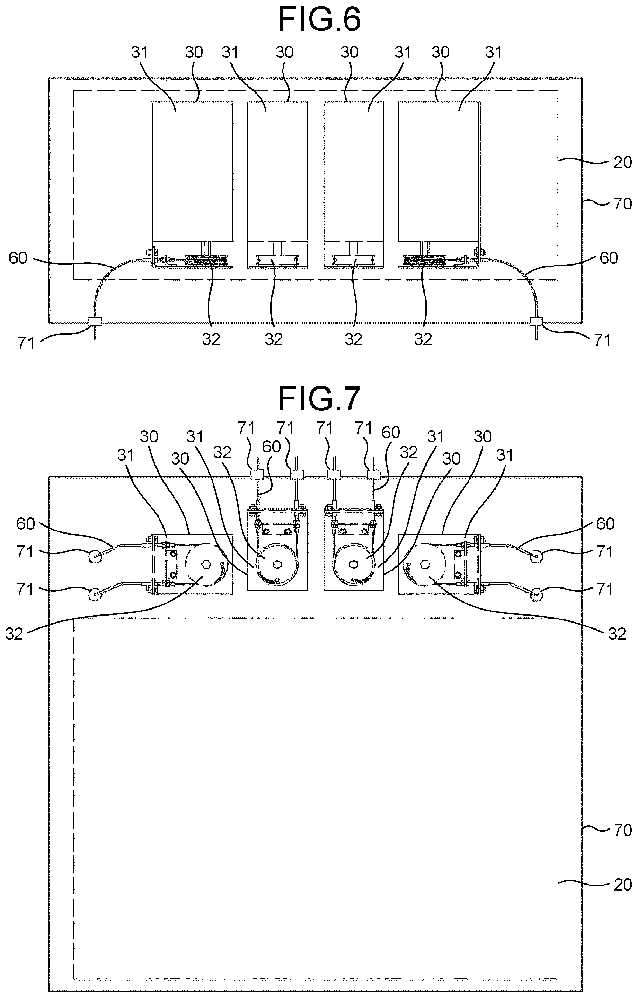

FIG. 6 is a horizontal cross-sectional view of the housing that houses the general switch manipulator and the breaker manipulator of the gas-insulated switch according to a third embodiment. FIG. 7 is a vertical cross-sectional view of the housing that houses the general switch manipulator and the breaker manipulator of the gas-insulated switch according to the third embodiment. In the gas-insulated switch 100 according to the third embodiment, the plurality of the general switch manipulators 30 are housed in the housing 70 common to the breaker manipulator 20. In the gas-insulated switch 100 according to the third embodiment, regarding the plurality of the general switch manipulators 30, the two general switch manipulators 30 are arranged in the horizontal direction and set as a set, and each set is disposed above the breaker manipulator 20. In the gas-insulated switch 100 according to the third embodiment, the two sets of the general switch manipulators 30 are arranged in the horizontal direction and housed. In one of the two general switch manipulators 30 included in the single set that is not adjacent to a general switch manipulator 30 in another set, the wire 60 is put around the driving pulley 32, from the direction opposite to the direction in which the other general switch manipulator 30 in the same set is disposed. Furthermore, in one of the two general switch manipulators 30 included in the single set adjacent to the general switch manipulator 30 of the other set, the wire 60 is put around the driving pulley 32 from the vertical direction. Therefore, for each of the two general switch manipulators 30 included in the single set, a direction in which the wire 60 is put around the driving pulley 32 is different by 90°. The wire 60 is drawn out from the housing 70 through the wire hole 71 formed in the housing 70.

In the gas-insulated switch 100 according to the third embodiment, since the direction in which the wire 60 is put around the driving pulley 32 is different, by 90°, for each of the two the general switch manipulators 30 included in the single set, it is possible to narrow the interval between the general switch manipulators 30, and it is possible to reduce the space where the general switch manipulator 30 is installed.

Furthermore, similarly to the gas-insulated switch 100 according to the first embodiment, in the gas-insulated switch 100 according to the third embodiment, the maintenance of the breaker manipulator 20 and the general switch manipulator 30 is easy, and the operation for switching the general switches 50 in the determined order can be easily and manually performed.

Furthermore, in the gas-insulated switch 100 according to the third embodiment, the wire 60 is put around the driving pulley 32 from the vertical direction, in one of the two general switch manipulators 30 included in the single set adjacent to the general switch manipulator 30 in the other set. Therefore, as compared with the gas-insulated switch 100 according to the second embodiment, in the gas-insulated switch 100 according to the third embodiment, it is possible to narrow the interval between the sets of the general switch manipulator 30, and it is possible to further reduce the space where the general switch manipulators 30 are installed.

Furthermore, in the gas-insulated switch 100 according to the third embodiment, since the plurality of the general switch manipulators 30 is installed at the same height as in the gas-insulated switch 100 according to the second embodiment, it is possible to manually operate all the general switch manipulators 30 without installing the stepstool.

### Reference Signs List

10 tank; 11 conductor; 12 breaker; 13 disconnector; 14 grounding switch; 20 breaker manipulator; 30 general switch manipulator; 31 motor; 32 driving pulley; 50 general switch; 51 driven pulley; 52 movable junction; 53 fixed junction; 60 wire; 70 housing; 71 wire hole; 100 gas-insulated switch.

## Claims

1. A gas-insulated switch (100) comprising:
a conductor (11) configured to form a power transmission circuit;
a breaker (12) configured to cut off a current flowing in the conductor (11);
a plurality of general switches (50) including:
a disconnector (13) configured to separate a part of the conductor (11);
a grounding switch (14) configured to ground the conductor (11) separated from the power transmission circuit by the disconnector (13); and
a switching operation unit (52, 53) configured to open and close according to rotation of a driven pulley (51);
a breaker manipulator (20) configured to cause the breaker (12) to perform a switching operation;
a plurality of general switch manipulators (30),
**characterised by** including a motor (31) and a driving pulley (32) that is rotationally driven by the motor (31);
a wire (60) configured to transmit rotational force of the driving pulley (32) to the driven pulley (51); and
a housing (70) configured to house the breaker manipulator (20) and the general switch manipulators (30), wherein
in the plurality of general switch manipulators (30),
two general switch manipulators (30) are arranged in a horizontal direction as a set and are disposed above the breaker manipulator (20) for each set in the housing (70), wherein
for each of the two general switch manipulators (30) included in the single set, the wire (60) is put around the driving pulley (32) from a direction different from a direction in which another general switch manipulator (30) in the same set is disposed, and
for each of the two general switch manipulators (30) included in the single set, the wire (60) is put around the driving pulley (32) in a direction opposite to a direction in which the another general switch manipulator (30) in the same set is disposed.

2. The gas-insulated switch (100) according to claim 1, wherein
the direction in which the wire (60) is put around the driving pulley (32) is different, by 90°, for each of the two general switch manipulators (30) included in the single set.

3. The gas-insulated switch (100) according to claim 1 or 2, wherein
the set is arranged in a horizontal direction.

## Patentansprüche

1. Gasisolierte Schalter (100), er aufweist:
einen Leiter (11), der eingerichtet ist, eine Leistungsübertragungsschaltung zu bilden;
einen Leistungsschalter (12), der eingerichtet ist, einen im Leiter (11) fließenden Strom zu unterbrechen;
eine Vielzahl von allgemeinen Schaltern (50), die umfassen:
eine Trenneinrichtung (13), die eingerichtet ist, einen Teil des Leiters (11) zu trennen;
einen Erdungsschalter (14), der eingerichtet ist, den durch die Trenneinrichtung (13) von der Leistungsübertragungsschaltung getrennten Leiter (11) zu erden; und
eine Schaltbetätigungseinheit (52, 53), die eingerichtet ist, entsprechend der Drehung einer angetriebenen Scheibe (51) sich zu öffnen und zu schließen;
einen Leistungsschalter-Manipulator (20), der eingerichtet ist, den Leistungsschalter (12) zu veranlassen, einen Schaltbetrieb durchzuführen;
eine Vielzahl von allgemeinen Schalter-Manipulatoren (30), **gekennzeichnet durch**
einen Motor (31) und eine Antriebsscheibe (32), die von dem Motor (31) drehangetrieben wird;
ein Seil (60), das eingerichtet ist, eine Drehkraft von der Antriebsscheibe (32) auf die angetriebene Scheibe (51) zu übertragen; und
ein Gehäuse (70), das eingerichtet ist, den Leistungsschalter-Manipulator (20) und die allgemeinen Schalter-Manipulatoren (30) aufzunehmen,
wobei
aus der Vielzahl von allgemeinen Schalter-Manipulatoren (30)
zwei allgemeine Schalter-Manipulatoren (30) als ein Satz in einer horizontalen Richtung angeordnet sind und für jeden Satz oberhalb des Leistungsschalter-Manipulators (20) in dem Gehäuse (70) angeordnet sind, wobei
für jeden der beiden in dem einzelnen Satz enthaltenen allgemeinen Schalter-Manipulatoren (30) das Seil (60) aus einer Richtung um die Antriebsscheibe (32) gelegt ist, die zu einer Richtung entgegengesetzt ist, in der ein anderer allgemeiner Schalter-Manipulator (30) in demselben Satz angeordnet ist.

2. Gasisolierte Schaltanlage (100) nach Anspruch 1, wobei
die Richtung, in der das Seil (60) um die Antriebsscheibe (32) gelegt ist, sich für jeden der beiden in dem einzelnen Satz enthaltenen allgemeinen Schalter-Manipulatoren (30) um 90° unterscheidet.

3. Gasisolierte Schaltanlage (100) nach Anspruch 1 oder 2, wobei der Satz in einer horizontalen Richtung angeordnet ist.

## Revendications

1. Commutateur à isolation au gaz (100) comprenant :
un conducteur (11) configuré pour former un circuit de transmission de puissance ;
un disjoncteur (12) configuré pour couper un courant circulant dans le conducteur (11) ;
une pluralité de commutateurs généraux (50) comportant :
un sectionneur (13) configuré pour séparer une partie du conducteur (11) ;
un commutateur de mise à la terre (14) configuré pour mettre à la terre le conducteur (11) séparé du circuit de transmission de puissance par le sectionneur (13) ; et
une unité d'opération de commutation (52, 53) configurée pour s'ouvrir et se fermer selon la rotation d'une poulie entraînée (51) ;
un manipulateur de disjoncteur (20) configuré pour amener le disjoncteur (12) à effectuer une opération de commutation ;
une pluralité de manipulateurs de commutateur général (30), **caractérisés par** l'inclusion d'un moteur (31) et d'une poulie d'entraînement (32) qui est entraînée en rotation par le moteur (31) ;
un câble (60) configuré pour transmettre la force de rotation de la poulie d'entraînement (32) à la poulie entraînée (51) ; et
un boîtier (70) conçu pour loger le manipulateur de disjoncteur (20) et les manipulateurs de commutateur général (30), dans lequel
dans la pluralité de manipulateurs de commutateur général (30),
deux manipulateurs de commutateur général (30) sont agencés dans une direction horizontale en tant qu'ensemble et sont disposés au-dessus du manipulateur de disjoncteur (20) pour chaque ensemble dans le boîtier (70), dans lequel
pour chacun des deux manipulateurs de commutateur général (30) inclus dans l'ensemble unique, le câble (60) est placé autour de la poulie d'entraînement (32) à partir d'une direction différente d'une direction dans laquelle un autre manipulateur de commutateur général (30) du même ensemble est disposé, et
pour chacun des deux manipulateurs de commutateur général (30) inclus dans l'ensemble unique, le câble (60) est placé autour de la poulie d'entraînement (32) dans une direction opposée à celle dans laquelle l'autre manipulateur de commutateur général (30) du même ensemble est disposé.

2. Commutateur à isolation au gaz (100) selon la revendication 1, dans lequel
la direction dans laquelle le câble (60) est placé autour de la poulie d'entraînement (32) est différente, de 90 °, pour chacun des deux manipulateurs de commutateur général (30) inclus dans l'ensemble unique.

3. Commutateur à isolation au gaz (100) selon la revendication 1 ou 2, dans lequel
l'ensemble est agencé dans une direction horizontale.
